# FASCICULE DE BREVET EUROPEEN

(11) **EP 3 547 040 B1**
(45) Date de publication et mention de la délivrance du brevet: **10.03.2021**
(21) Numéro de dépôt: 19164373.3
(22) Date de dépôt: 21.03.2019
(51) Int. Cl.: G04B 15/14

(54) **ROUE POUR MOUVEMENT HORLOGER**
RAD FÜR UHRWERK
WHEEL FOR A CLOCK MOVEMENT

(30) Priorité: 29.03.2018 EP 18165006
(43) Date de publication de la demande: 02.10.2019
(73) Titulaire: ROLEX SA, 1211 Genève 26 (CH)
(72) Inventeur: CALAME, Florian, 1066 Epalinges (CH)
(74) Mandataire: Moinas & Savoye SARL

(56) Documents cités:
- EP-A1- 1 637 939
- EP-A1- 2 581 794
- CH-A- 281 799

## Description

La présente invention concerne un composant horloger, particulièrement une roue pour un mouvement horloger, ainsi que tout ou partie d'un mouvement horloger intégrant un tel composant ou une telle roue, notamment un dispositif d'échappement comprenant une roue d'ancre. L'invention porte aussi sur une pièce d'horlogerie comprenant une telle roue pour mouvement horloger.

L'invention porte aussi sur un procédé d'entraînement d'un mouvement horloger à partir d'un tel composant ou d'une telle roue. L'invention porte aussi sur un ensemble d'au moins deux composants horlogers coopérant entre eux par un contact lubrifié. Enfin, l'invention porte sur un procédé de fabrication d'un tel composant ou d'une telle roue pour un mouvement horloger.

Un mouvement horloger comprend des composants en mouvement dont des composants horlogers en contact les uns avec les autres, pour la transmission mécanique d'un mouvement. Ces composants horlogers en contact subissent des frottements, qui induisent une usure des pièces, susceptible d'altérer la précision du mouvement horloger.

Pour réduire ces frottements, il est connu d'utiliser un lubrifiant liquide sur les zones en frottement de composants horlogers, généralement une huile. L'huile utilisée doit être stable, et rester au mieux sur la zone de contact dans le temps. Il faut de plus réduire le risque que l'huile se disperse dans le mouvement horloger.

A titre d'exemple, le document CH281799 décrit une solution de lubrification pour un dispositif d'échappement, dans lequel les dents de la roue d'échappement comprennent une face en retrait formant un épaulement qui constitue un huilier, dans lequel l'huile se maintient par capillarité. Une telle solution empêche la dispersion de l'huile dans le mouvement horloger et favorise le positionnement de l'huile à proximité de la zone de contact.

On connaît aussi le document EP 1 637 939 A1, qui utilise une réserve de lubrifiant stocké dans un canal creusé dans l'ancre.

L'objet de l'invention est d'améliorer la lubrification entre des composants horlogers.

Plus précisément, un objet de l'invention est d'améliorer le maintien d'un lubrifiant dans une zone de contact entre deux composants horlogers.

A cet effet, l'invention repose sur une roue telle que définie par la revendication 1. L'invention porte également sur : un dispositif d'échappement tel que défini par la revendication 9 ; et un procédé tel que défini par la revendication 13.

L'invention est plus précisément définie par les revendications.

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente un dispositif d'échappement pour mouvement horloger selon un mode de réalisation de l'invention.
La figure 2 représente une roue d"échappement du dispositif d'échappement selon un premier mode de réalisation de l'invention.
La figure 3 représente plusieurs dents successives de la roue d'échappement du dispositif d'échappement selon le premier mode de réalisation de l'invention.
La figure 4 représente une dent de la roue d"échappement du dispositif d'échappement selon le premier mode de réalisation de l'invention.
Les figures 5a et 5b représentent schématiquement le positionnement du lubrifiant sur la surface de contact d'une palette d'une ancre ou d'un bloqueur du dispositif d'échappement, après sa coopération respectivement avec une première dent puis avec une deuxième dent de la roue d'échappement, selon le premier mode de réalisation de l'invention.
La figure 6 représente une dent d'une roue d'échappement d'un dispositif d'échappement selon une variante du premier mode de réalisation de l'invention.
La figure 7 représente une dent d'une roue d'échappement d'un dispositif d'échappement selon un deuxième mode de réalisation de l'invention.
Les figures 8a et 8b représentent schématiquement le positionnement du lubrifiant sur la surface de contact d'une palette d'une ancre ou d'un bloqueur du dispositif d'échappement, après sa coopération respectivement avec une première dent puis avec une deuxième dent de la roue d'échappement, selon le deuxième mode de réalisation de l'invention.

Pour une raison de simplicité, les mêmes références seront utilisées pour désigner des caractéristiques et/ou composants similaires sur les différents modes de réalisation de l'invention.

De plus, en considérant l'ensemble des surfaces de contact d'un composant horloger, qui sont par exemple réparties sur différentes dents dans le cas d'une roue ou d'une crémaillère, nous définirons par convention comme plan horizontal un plan dans lequel le composant horloger est globalement agencé. Un tel plan horizontal sera représenté par les deux axes X et Y. Par exemple, dans le cas d'une roue, le plan horizontal sera un plan perpendiculaire à l'axe de rotation de la roue : les dents de la roue sont réparties dans un tel plan et leur hauteur h s'étend de manière perpendiculaire à ce plan, dans une direction définie comme verticale et indexée par un vecteur Z. Dans le cas d'une roue, la direction verticale est donc parallèle à l'axe de rotation de la roue. On pourra plus précisément définir comme plan horizontal médian un plan passant sensiblement à la hauteur moyenne de l'ensemble des dents. Dans le cas d'une crémaillère, le plan X-Y horizontal comprendra la direction de déplacement de la crémaillère et une direction transverse dans laquelle l'ensemble de la crémaillère s'étend. La direction verticale comprendra la hauteur h des dents, définie de manière similaire à celle des dents d'une roue. Dans ces deux cas, la direction verticale Z est donc définie comme la direction perpendiculaire au plan horizontal. Dans le cas d'une crémaillère à denture de chant, la direction Z est perpendiculaire à la direction de déplacement de la crémaillère.

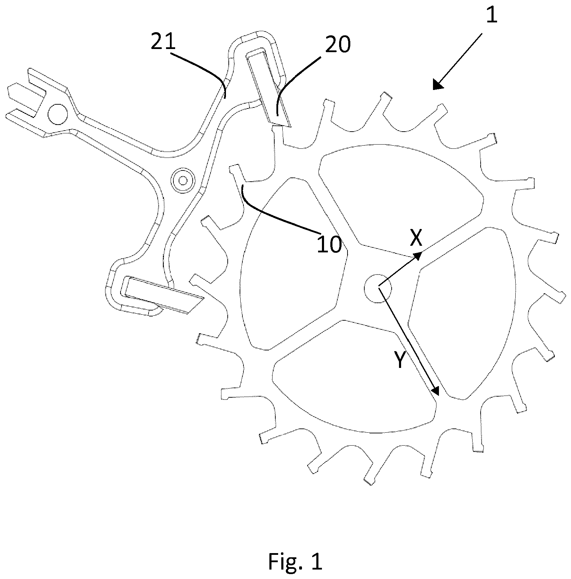

La figure 1 représente un dispositif d'échappement à ancre suisse selon un mode de réalisation de l'invention. Ce dispositif d'échappement comprend de manière connue une roue 1 d'échappement comprenant des dents 10 coopérant avec des palettes 20 agencées sur une ancre d'échappement 21. Lors de leur coopération de manière connue, les dents 10 de la roue d'échappement viennent coopérer par frottement avec les palettes 20. A titre d'exemple sur la figure 1, une dent 10 coopère avec la palette 20 de sortie.

Selon le mode de réalisation, la roue d'échappement se différencie des solutions traditionnelles notamment par la forme de ses dents. Il apparaît qu'une dent 10 comprend sur son extrémité une surface de contact 11 plane, ou sensiblement plane, qui s'étend dans un plan orthoradial vertical, perpendiculaire à la direction radiale. Cette surface vient progressivement frotter sur une palette 20, selon son déplacement dans le plan horizontal selon la direction orthoradiale lors de la rotation de la roue. Ainsi, tous les points de cette surface de contact 11 alignés selon la direction verticale Z viennent en contact simultanément ou sensiblement simultanément avec la surface de contact correspondante de la palette 20, alors que les points de cette surface de contact 11 alignés selon la direction orthoradiale viennent en contact successivement.

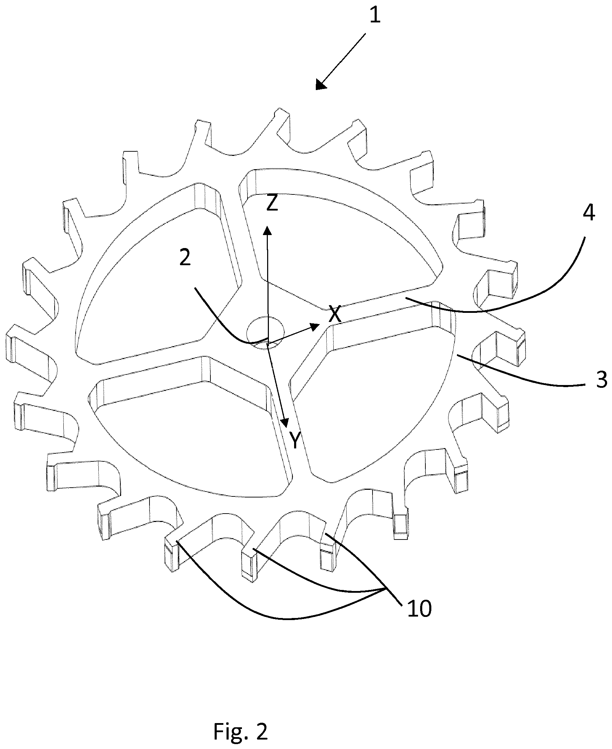

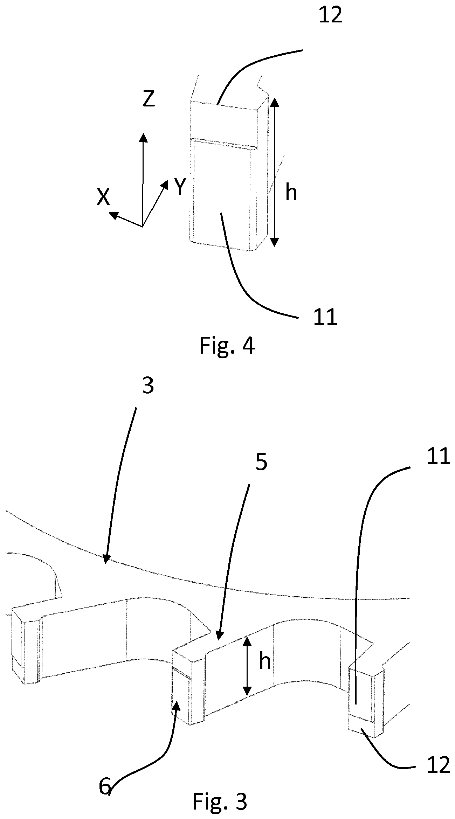

La roue 1 d'échappement, représentée sur la figure 2, est destinée à un montage sur un axe de rotation vertical, positionné en son centre 2. Elle comprend une serge 3 agencée autour de l'axe de rotation, maintenue par quatre bras radiaux 4. Des dents 10 s'étendent depuis la périphérie extérieure de la serge 3. Comme représenté par la figure 3, les dents 10 comprennent une base 5 portant une surface extrême 6, sur laquelle est agencée au moins une surface de contact 11, destinée à interagir par frottement avec au moins une surface de contact correspondante des palettes. Ce frottement est favorisé par l'utilisation d'un lubrifiant, par exemple choisi parmi les lubrifiants connus.

Selon ce mode de réalisation, la surface extrême 6 agencée à l'extrémité d'une dent 10 comprend une zone découpée par rapport à la même surface qui serait continue sur une dent d'un dispositif d'échappement de l'état de la technique. Cette découpe forme une surface plane en retrait 12, qui ne vient pas, ou moins, en contact avec la surface de contact correspondante de la palette. Selon le mode de réalisation de la figure 2, la surface en retrait 12, visible sur les figures 3 et 4, s'étend sur toute la largeur de la surface extrême 6 de la dent, cette largeur étant mesurée selon la direction orthoradiale. Le reste de la surface extrême 6, non découpé, forme une surface de contact 11, destinée à coopérer par frottement avec la palette 20. La surface en retrait 12 est séparée de la surface de contact 11 par une paroi plane perpendiculaire, sensiblement positionnée dans un plan horizontal. La hauteur h de l'extrémité de la dent 10, mesurée selon la direction verticale Z, comprenant les deux surfaces de contact 11 et en retrait 12, est sensiblement la même que la hauteur de la base 5 de la dent 10, reliant la surface extrême 6 à la serge 3. Selon la réalisation de la figure 4, la surface en retrait 12 est sensiblement rectangulaire, parallèle à la surface de contact 11. La hauteur de cette surface de contact 11 représente environ les deux tiers de la hauteur h totale de la dent, la surface en retrait 12 occupant le tiers le plus haut de cette dent 10, considéré selon la direction verticale Z.

Selon le mode de réalisation, la roue 1 d'échappement comprend une alternance de dents 10 différentes, qui se différencient par le positionnement de leur découpe, c'est-à-dire de la surface en retrait 12. Sur la réalisation de la figure 4, la surface en retrait 12 se trouve sur l'extrémité haute de la dent 10, et s'étend depuis le haut sur environ un tiers de sa hauteur, comme mentionné ci-dessus. Comme cela est visible sur la figure 3, la roue d'échappement comprend une alternance de dents telles que décrites en référence avec la figure 3 avec des dents similaires mais dont la surface en retrait 12 est positionnée en partie basse de la dent, s'étendant sur sensiblement un tiers de sa hauteur en partant du bas. Autrement dit, la surface de contact 11 est décalée dans la direction verticale d'une première dent à sa dent successive, ce décalage correspondant à environ un tiers de la hauteur de la dent. Nous entendons par dent successive la dent immédiatement successive, c'est-à-dire la dent adjacente qui viendra la première en contact avec la palette après la première dent considérée. Ainsi, dans ce mode de réalisation, la roue comprend finalement deux types de dents, et chaque dent d'un premier type est entourée de deux dents adjacentes, précédente et successive, du deuxième type, formant ainsi une alternance de dents du premier et du deuxième type. Les découpes des dents 10 sont telles que les surfaces en retrait 12 sont alternativement sur les extrémités haute et basse d'une surface extrême 6 d'une dent 10. Autrement dit, chaque surface en retrait 12 et chaque surface de contact 11 des dents sont alternativement symétriquement réparties autour d'un plan horizontal médian de la roue 1.

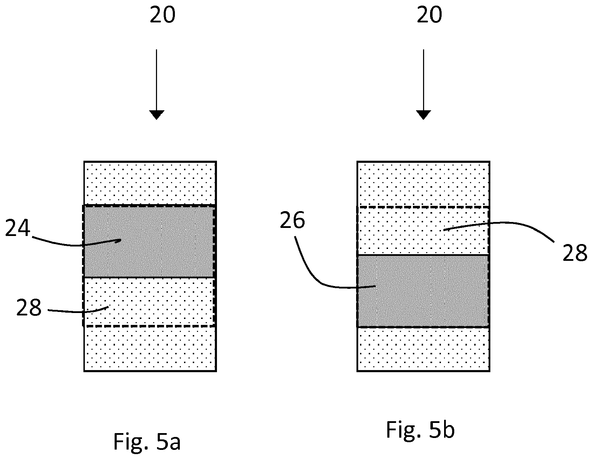

L'effet technique produit par la roue d'échappement selon le premier mode de réalisation décrit ci-dessus est illustré par les figures 5a et 5b. Ces figures 5a, 5b illustrent la surface de contact de la palette 20, positionnée en vis-à-vis de la roue 1 d'échappement, qui coopère avec les dents de cette roue d'échappement. Notamment, la figure 5a représente l'état de la palette après la coopération avec une première dent 10 de la roue d'échappement, correspondant à une dent dont la découpe est en partie basse de sa surface extrême 6. Il en résulte que le contact est réalisé par la surface de contact 11 de la dent 10, en position haute de la dent. Ce contact a pour effet de déplacer le lubrifiant positionné sur la palette 20, et à la fin de cette coopération, la palette présente une zone haute 24 où on note une pénurie de lubrifiant, précisément sur la zone ayant subi le frottement avec la surface de contact 11 de la dent 10. Le lubrifiant est ainsi déplacé sur la surface restante de la palette 20, notamment en partie basse.

La dent 10 successive de la roue d'échappement comprend une surface de contact 11 différente, positionnée en partie basse de la dent. Cette surface de contact 11 va donc venir frotter en partie basse de la palette, donc sur une surface comprenant du lubrifiant, ce qui est favorable. La figure 5b représente l'état de la palette après coopération avec cette deuxième dent 10 de la roue d'échappement, correspondant à une dent dont la découpe est en partie haute. Ce contact a eu pour effet de déplacer le lubrifiant positionné sur la palette 20, et à la fin de cette coopération, la palette présente une zone basse 26 où on note une pénurie de lubrifiant, précisément sur la zone où a eu lieu le frottement avec la deuxième dent.

Le lubrifiant a été ainsi déplacé sur la surface restante de la palette 20, notamment en partie haute.

Finalement, il résulte donc de cet agencement que la surface de contact 28 totale de la palette 20 présente une superficie supérieure à celle de chacune des deux surfaces de contact 11 distinctes avec lesquelles elle coopère. Cette surface de contact 28 de la palette 20 correspond sensiblement à la réunion des zones basse 26 et haute 24 susmentionnées, qui peuvent toutefois se chevaucher partiellement. Elle peut de même aller légèrement au-delà de la superficie correspondant à ces deux zones basse et haute. Chaque surface de contact 11 distincte de la roue 1 d'échappement, plus généralement du premier composant horloger, coopère par frottement sur une zone de la surface de contact 28 de la palette 20, plus généralement un deuxième composant horloger ; cette zone représente ainsi une zone de contact entre les deux composants horlogers 1, 20 considérés. D'autre part, cette zone de contact présente une superficie strictement inférieure à la superficie de la surface de contact 28 du deuxième composant horloger, la palette 20 dans le mode de réalisation décrit. Chaque zone de contact 24, 26 présente par définition une superficie sensiblement égale à celle de la surface de contact du premier composant horloger, qui vient en contact précisément sur cette zone de contact. La configuration des surfaces de contact 11 distinctes du premier composant horloger, la roue 1 dans ce mode de réalisation, est telle que leur décalage susmentionné correspond à un décalage de leurs zones de contact sur un même deuxième composant horloger. Ce décalage des zones de contact est un décalage sur la même surface de contact du deuxième composant horloger dans le mode de réalisation de l'invention. Autrement dit, lesdites deux surfaces de contact du composant horloger considéré, dit le premier composant horloger, par exemple une roue, sont décalées l'une par rapport à l'autre de sorte à décaler leurs zones de contact sur un même deuxième composant horloger. Ce décalage est tel qu'une première surface de contact d'un composant horloger considéré est apte à déplacer un lubrifiant présent sur un deuxième composant horloger, depuis une première zone de contact sur laquelle elle vient en contact vers une deuxième zone de contact dudit deuxième composant horloger sur laquelle viendra ensuite en contact une deuxième surface de contact distincte du composant horloger considéré, donc vers une autre zone de la surface de contact du deuxième composant horloger. La surface de contact du deuxième composant horloger forme une même surface continue sur laquelle sont disposées lesdites deux zones de contact, de manière décalées, c'est-à-dire non totalement superposées.

Ce schéma est ainsi répété avec toutes les dents de la roue d'échappement, qui alterne les deux types de dents décrits précédemment. Il en résulte que chaque contact entre une surface de contact 11 d'une dent 10 et la palette 20 se réalise sur une zone caractérisée par une bonne lubrification, ce qui est avantageux. De plus, ce mouvement peut se répéter indéfiniment, sans perte de lubrifiant.

D'autre part, l'invention permet aussi la mise en œuvre d'un procédé de fabrication très simple de la roue d'échappement et de ses dents. Il est en effet possible de fabriquer une roue d'échappement traditionnelle, puis d'ajouter une étape de découpe à l'extrémité de tout ou partie des dents, de sorte à obtenir les surfaces de contact 11 et les surfaces en retrait 12 décrites précédemment.

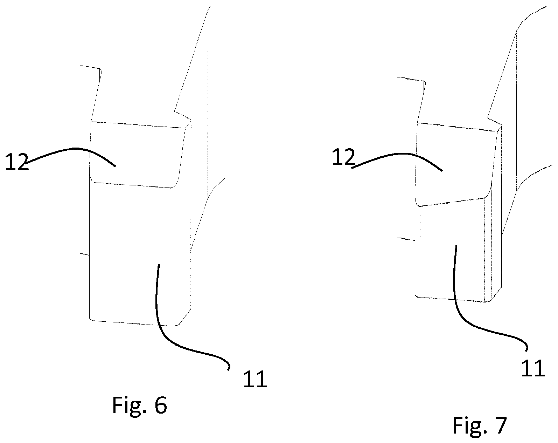

Naturellement, l'invention ne se limite pas au mode de réalisation décrit. Par exemple, la surface de contact 11 d'une dent peut être formée par toute autre découpe, par exemple en biseau, comme représenté sur la figure 6. Cette dent 10 comprend ainsi un flanc incliné formant une surface en retrait 12 inclinée. Comme précédemment, deux types de dents pourront être alternés, respectivement avec un biseau en partie haute et en partie basse. Il est possible de mettre en œuvre des décalages entre deux surfaces de contact selon plusieurs directions, comme cela ressort par exemple d'un autre exemple représenté par la figure 7 et décrit plus bas.

Plus généralement, la roue ou le premier composant horloger considéré sera tel qu'il comprend au moins deux surfaces de contact distinctes décalées l'une par rapport à l'autre, de sorte qu'une première surface de contact est apte à déplacer un lubrifiant présent sur un deuxième composant horloger vers une surface sur laquelle viendra ensuite en contact la deuxième surface de contact. La même quantité de lubrifiant se déplace ainsi toujours sur la même surface de contact du deuxième composant horloger, d'une zone de contact à une autre, par exemple de la zone 24 à la zone 26, chaque zone de contact correspondant à une sous-partie de la surface de contact totale du deuxième composant horloger, de superficie strictement inférieure à celle de la superficie totale de la surface de contact 28 du deuxième composant horloger. Chaque zone de contact est totalement ou partiellement décalée par rapport à toute autre zone de contact de la même surface de contact du deuxième composant horloger. Autrement dit, deux zones de contact, correspondant à deux zones d'un deuxième composant horloger sur lesquelles viennent en contact deux surfaces de contact distinctes d'un premier composant horloger, peuvent être totalement décalées ou partiellement décalées, c'est-à-dire totalement distinctes ou partiellement superposées, mais non totalement superposées.

Avantageusement, l'agencement comprend deux zones de contact sur ledit deuxième composant horloger. Avantageusement encore, ces deux zones de contact présentent sensiblement une superficie et/ou une hauteur sensiblement égale(s) entre elles, et/ou une superficie et/ou une hauteur sensiblement égale(s) à celle(s) respectivement de deux surfaces de contact distinctes du premier composant horloger. En variante, l'agencement comprend au moins trois zones de contact sur ledit deuxième composant horloger, et le premier composant horloger considéré comprend de même au moins trois surfaces de contact distinctes correspondant auxdites trois zones de contact.

De plus, les deux types de dents ou plus généralement de surfaces de contact ont été répartis de manière alternée au sein d'un même composant horloger. Naturellement, la répartition pourrait être différente tout en permettant une amélioration par rapport à l'état de la technique. Il est par exemple possible de positionner deux surfaces de contact successives du premier type, puis deux surfaces de contact successives du deuxième type, et ainsi de suite. En variante, toute autre répartition des surfaces de contact des deux types est possible. En variante encore, il est possible d'imaginer combiner plus de deux types de dents ou plus généralement plus de deux types de surfaces de contact, toujours avec pour même objectif de décaler les zones de contact sur un deuxième composant horloger pour varier les zones de contact de manière favorable par rapport au positionnement d'un lubrifiant.

Dans ce premier mode de réalisation, la surface extrême 6 d'une dent d'une roue d'échappement présentait une section constante selon la direction orthoradiale. La figure 7 représente l'extrémité d'une dent 10 selon un deuxième mode de réalisation. Dans ce mode de réalisation, la section est variable dans la direction orthoradiale. Notamment, la dent présente une surface en retrait 12 obtenue par un biseau variable. Ainsi, lors du contact de la surface de contact 11 sur une surface d'une palette, on constate un effet complémentaire, qui induit non seulement un déplacement du lubrifiant hors de la zone de contact au passage de la dent mais génère de plus une zone de concentration de lubrifiant, sous forme d'un bourrelet de lubrifiant. En remarque, les découpes peuvent être faites selon la technique de gravure ionique réactive profonde (DRIE). Elle peut nécessiter un ajustement des paramètres pour former le biseau.

Considérons une roue d'échappement comprenant une alternance de dents selon la figure 7, avec un positionnement de la surface en retrait 12 alternativement en bas et en haut de la dent selon l'axe vertical Z.

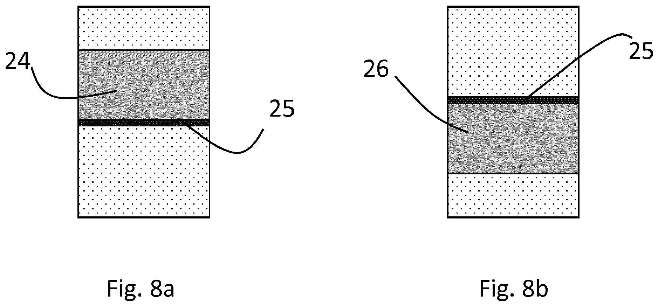

La figure 8a représente la surface de la palette après le passage de la première dent comprenant la surface en retrait en partie basse. Cette coopération a eu pour effet de déplacer le lubrifiant positionné sur la palette 20 en dehors de la surface de contact. A la fin de cette coopération, la palette présente une zone haute 24 où on note une pénurie de lubrifiant, précisément sur la zone ayant subi le frottement de la surface de contact 11 de la dent 10. En complément, on constate la présence d'un bourrelet 25 de lubrifiant sur la zone inférieure où la présence de lubrifiant est concentrée.

La figure 8b représente l'état de la palette après la coopération avec une deuxième dent 10 de la roue d'échappement, correspondant à une dent dont la découpe est en partie haute de son extrémité 6. Il en résulte que le contact a été réalisé par la surface de contact 11 de la dent 10, en position basse de la dent, donc sur la zone de la palette bien lubrifiée. Ce contact a eu pour effet de déplacer le lubrifiant positionné sur la palette 20, et à la fin de cette coopération, la palette présente une zone basse 26 où on note une pénurie de lubrifiant, précisément sur la zone où a eu lieu le frottement avec la deuxième dent. Comme précédemment, on constate la présence d'un bourrelet 25 de lubrifiant sur la zone supérieure où la présence de lubrifiant est concentrée.

Finalement, comme cela a été vu précédemment, deux surfaces de contact distinctes de deux dents distinctes sont décalées l'une par rapport à l'autre de sorte à venir coopérer en deux temps distincts avec le même deuxième composant horloger, et de sorte que lors de la coopération de la deuxième dent, elle puisse profiter d'une bonne lubrification du deuxième composant. Ce décalage est réalisé selon une direction verticale Z. Autrement dit, deux surfaces de contact distinctes de deux dents distinctes sont décalées par rapport à un plan horizontal.

Avantageusement, les deux dents distinctes possèdent des géométries similaires, modifiées l'une par rapport à l'autre selon une symétrie par rapport à un plan horizontal médian de la surface extrême 6 d'une dent.

L'invention est particulièrement adaptée à une roue d'ancre pour dispositif d'échappement, comme cela a été vu précédemment. La figure 1 illustre un échappement à ancre suisse, mais bien entendu cet exemple n'est pas limitatif, et l'invention peut être adaptée à toute roue d'ancre pour tout dispositif d'échappement. Notamment, l'ancre ou le bloqueur peut être fait en une seule et même pièce, comme c'est le cas d'une ancre suisse. En variante, l'ancre ou le bloqueur peut aussi être réalisé en deux pièces distinctes et fait notamment de deux pièces engrenant l'une et l'autre comme divulgué au sein d'une troisième variante d'un deuxième mode de réalisation d'un échappement tel que divulgué au sein de la demande WO20171090046. Dans cette troisième variante, le dispositif d'échappement comprend un premier mobile d'échappement, un deuxième mobile d'échappement et un bloqueur, le deuxième mobile d'échappement étant interposé entre le premier mobile d'échappement et le bloqueur, notamment le deuxième mobile d'échappement coopérant par contact avec le premier mobile d'échappement d'une part et avec le bloqueur d'autre part. Le premier mobile d'échappement, le deuxième mobile d'échappement et le bloqueur peuvent être conformés et agencés de sorte qu'en phase de dégagement du dispositif d'échappement, un effort du bloqueur asservi par l'oscillateur est transmis au premier mobile d'échappement par l'intermédiaire du deuxième mobile d'échappement. Le deuxième mobile d'échappement peut être un deuxième pignon ou peut comprendre un deuxième pignon et une deuxième roue.

Par ailleurs, l'invention reste applicable à tout composant horloger subissant un frottement avec au moins un deuxième composant horloger. Notamment, elle est adaptée à un composant horloger générant un entraînement d'un autre composant horloger. Ainsi, le composant horloger peut être une crémaillère comprenant des dents alignées. Dans tous ces cas où le composant horloger est un composant comprenant plusieurs dents, les surfaces de contact d'au moins deux dents distinctes sont décalées l'une par rapport à l'autre relativement à tout plan horizontal. Avantageusement, toutes les dents du composant horloger denté sont réparties en deux types de dents, voire trois types ou plus, et les surfaces de contact des différents types de dents sont décalées les unes par rapport aux autres relativement à tout plan horizontal. Avantageusement, le composant denté comprend deux types de dents, dont les surfaces de contact respectives sont positionnées de part et d'autre du plan horizontal médian du composant horloger. Avantageusement encore, le composant denté comprend deux types de dents, dont les surfaces de contact respectives sont positionnées symétriquement autour du plan horizontal médian du composant horloger.

L'invention porte aussi sur un procédé d'entraînement pour mouvement horloger comprenant une coopération par contact lubrifié entre un premier composant horloger, notamment une roue, et un deuxième composant horloger, caractérisé en ce qu'il comprend les étapes suivantes :
- premier contact entre une première surface de contact du premier composant horloger et le deuxième composant horloger, puis
- deuxième contact entre une deuxième surface de contact décalée par rapport à la première surface de contact du premier composant horloger ou de la roue et le deuxième composant horloger,
les deux surfaces de contact du premier composant horloger étant décalées de sorte que la première surface de contact est apte à déplacer un lubrifiant présent sur le deuxième composant horloger vers une surface sur laquelle vient ensuite en contact la deuxième surface de contact.

Comme mentionné précédemment, l'invention concerne un composant horloger, conçu pour coopérer de manière particulière avec autre composant horloger, en comprenant au moins deux surfaces de contact distinctes décalées l'une par rapport à l'autre, c'est-à-dire que ces deux surfaces de contact sont conçues pour venir en frottement ou appui sur deux zones de contact décalées, autrement dit non totalement superposées, d'un même deuxième composant horloger, et même de préférence d'une même surface de contact d'un même deuxième composant horloger. Cette construction permet de gérer avantageusement la lubrification du contact entre deux composants horlogers, comme cela a été exposé précédemment.

## Revendications

1. Roue (1) pour mouvement horloger, destinée à coopérer par un contact lubrifié avec au moins un deuxième composant horloger, la roue (1) comprenant au moins deux dents (10) distinctes successives, une première dent et une deuxième dent, comprenant chacune au moins une surface de contact (11), respectivement une première surface de contact et une deuxième surface de contact, ces surfaces de contact (11) desdites deux dents (10) distinctes successives étant ainsi destinées à coopérer avec un même deuxième composant horloger, **caractérisée en ce que** lesdites deux surfaces de contact (11) des deux dents (10) distinctes successives sont décalées l'une par rapport à l'autre de sorte à décaler leurs zones de contact non totalement superposées sur un même deuxième composant, respectivement une première zone de contact et une deuxième zone de contact non totalement superposées, de sorte que la première surface de contact (11) de la première dent (10) est apte à déplacer un lubrifiant présent sur la première zone de contact d'un deuxième composant horloger vers une surface de la deuxième zone de contact, et de sorte que la deuxième surface de contact (11) de la deuxième dent est apte à venir ensuite en contact sur ladite surface de la deuxième zone de contact du deuxième composant comprenant le lubrifiant.

2. Roue (1) pour mouvement horloger selon la revendication précédente, **caractérisée en ce qu'**elle comprend deux types de dents (10), chaque dent de chaque type comprenant au moins une surface de contact (11) destinée à coopérer avec un même deuxième composant horloger, les surfaces de contact (11) respectives des deux types de dents (10) étant décalées l'une par rapport à l'autre, et **en ce qu'**elle comprend une alternance d'une dent (10) du premier type avec une dent (10) du deuxième type, de sorte qu'une première surface de contact (11) d'une première dent selon le premier type est apte à déplacer le lubrifiant présent sur un deuxième composant horloger vers une surface, et de sorte qu'une deuxième surface de contact d'une dent du deuxième type est apte à venir ensuite en contact sur ladite surface du deuxième composant comprenant le lubrifiant, et inversement.

3. Roue (1) pour mouvement horloger selon l'une des revendications 1 à 2, **caractérisée en ce que** lesdites deux surfaces de contact (11) de deux dents (10) distinctes successives sont décalées l'une par rapport à l'autre selon une symétrie par rapport à un plan horizontal médian de la roue (1) perpendiculaire à l'axe de rotation de la roue.

4. Roue (1) pour mouvement horloger selon l'une des revendications 1 à 3, **caractérisée en ce que** lesdites deux surfaces de contact (11) des deux dents (10) distinctes successives sont décalées par une translation selon une direction verticale (Z) parallèle à l'axe de rotation de la roue l'une par rapport à l'autre et/ou **en ce que** lesdites deux surfaces de contact (11) de deux dents (10) distinctes successives sont décalées l'une par rapport à l'autre par rapport à un plan horizontal perpendiculaire à l'axe de rotation de la roue, et/ou **en ce que** lesdites deux surfaces de contact (11) décalées des deux dents (10) distinctes successives s'étendent respectivement depuis les extrémités inférieure et supérieure de la surface extrême (6) desdites dents (10).

5. Roue (1) pour mouvement horloger selon l'une des revendications 1 à 4, **caractérisée en ce qu'**elle comprend au moins deux dents (10) distinctes successives comprenant chacune une surface extrême (6) formant une surface de contact (11) se différenciant par une découpe formant une surface en retrait (12) positionnée différemment par rapport à la surface extrême (6) sur chacune des deux dents.

6. Roue (1) pour mouvement horloger selon la revendication précédente, **caractérisée en ce qu'**elle comprend au moins une dent (10) dont sa surface extrême (6) comprend une surface en retrait (12) plane et rectangulaire, sensiblement parallèle à une surface de contact (11) plane, ces deux surfaces (11, 12) étant séparées par une paroi positionnée dans un plan horizontal perpendiculaire à l'axe de rotation de la roue.

7. Roue (1) pour mouvement horloger selon la revendication 5, **caractérisée en ce qu'**elle comprend au moins une dent (10) dont sa surface extrême (6) comprend une surface en retrait (12) en biseau par rapport à une surface de contact (11), ces deux surfaces (11, 12) étant délimitées par un segment s'étendant dans la direction orthoradiale ou par un biseau s'étendant dans les deux directions orthoradiale et verticale (Z) parallèle à l'axe de rotation de la roue pour former une surface en retrait (12) en biseau tronqué.

8. Ensemble pour mouvement horloger comprenant une roue (1) selon l'une des revendications 1 à 7 et un deuxième composant horloger, la roue coopérant par un contact lubrifié avec le deuxième composant horloger, la roue comprenant au moins deux surfaces de contact distinctes coopérant avec le deuxième composant horloger, **caractérisé en ce que** lesdites deux surfaces de contact sont décalées l'une par rapport à l'autre de sorte à décaler leurs deux zones de contact respectives, respectivement sur une première zone de contact et une deuxième zone de contact, sur le deuxième composant, de sorte qu'une première surface de contact de la roue est apte à déplacer un lubrifiant présent sur le deuxième composant horloger de la première zone de contact, sur laquelle vient en contact ladite première surface de contact, vers la deuxième zone de contact, décalée par rapport à la première zone de contact, sur laquelle vient en contact ladite deuxième surface de contact, lesdites deux zones de contact étant positionnées sur une même surface de contact du deuxième composant.

9. Dispositif d'échappement pour mouvement horloger, **caractérisé en ce qu'**il comprend une roue (1) d'échappement selon l'une des revendications 1 à 7, coopérant avec une ancre d'échappement (21) ou **en ce qu'**il comprend un ensemble pour mouvement horloger selon la revendication précédente, dans lequel la roue (1) est une roue d'échappement et le deuxième composant horloger est une ancre d'échappement (21).

10. Dispositif d'échappement pour mouvement horloger selon la revendication précédente, **caractérisé en ce que** l'ancre d'échappement (21) comprend deux pièces distinctes.

11. Mouvement horloger, **caractérisé en ce qu'**il comprend au moins une roue (1) selon l'une des revendications 1 à 7 ou un dispositif d'échappement selon la revendication 9 ou 10 ou un ensemble selon la revendication 8.

12. Pièce d'horlogerie, notamment montre-bracelet, **caractérisée en ce qu'**elle comprend au moins une roue (1) selon l'une des revendications 1 à 7 ou un mouvement horloger selon la revendication précédente.

13. Procédé de fabrication d'une roue pour mouvement horloger selon l'une des revendications 1 à 7, ladite roue étant destiné(e) à coopérer par un contact lubrifié avec au moins un deuxième composant horloger, ladite roue comprenant au moins deux surfaces de contact destinées à coopérer avec un même deuxième composant horloger, **caractérisé en ce que** le procédé de fabrication comprend une étape de fabrication desdites deux surfaces de contact de manière décalée l'une par rapport à l'autre de sorte à décaler leurs zones de contact sur un même deuxième composant, de sorte qu'une première surface de contact est apte à déplacer un lubrifiant présent sur un deuxième composant horloger vers une surface, et de sorte qu'une deuxième surface de contact est apte à venir ensuite en contact sur ladite surface du deuxième composant comprenant le lubrifiant.

14. Procédé de fabrication d'un composant horloger ou d'une roue selon la revendication précédente, **caractérisé en ce que** l'étape de fabrication desdites deux surfaces de contact de manière décalée comprend une étape de découpe, notamment par usinage, d'une surface extrême (6) d'une dent pour former une surface de contact (11) et une surface en retrait (12) contiguës.

## Patentansprüche

1. Rad (1) für ein Uhrwerk, das dazu bestimmt ist, durch einen geschmierten Kontakt mit zumindest einer zweiten Uhrkomponente zusammenzuwirken, wobei das Rad (1) zumindest zwei aufeinanderfolgende separate Zähne (10), einen ersten Zahn und einen zweiten Zahn, umfasst, die jeweils zumindest eine Kontaktfläche (11), d. h. eine erste Kontaktfläche und eine zweite Kontaktfläche, umfassen, wobei diese Kontaktflächen (11) der beiden aufeinanderfolgenden separaten Zähne (10) dazu bestimmt sind, mit einer und derselben zweiten Uhrkomponente zusammenzuwirken, **dadurch gekennzeichnet, dass** die beiden Kontaktflächen (11) der beiden aufeinanderfolgenden separaten Zähne (10) zueinander versetzt sind, so dass ihre sich nicht vollständig überlappenden Kontaktbereiche, d. h. eine erster Kontaktbereich und ein zweiter Kontaktbereich, die sich nicht vollständig überlappen, auf einer und derselben zweiten Komponente versetzt sind, so dass die erste Kontaktfläche (11) des ersten Zahns (10) in der Lage ist, ein auf dem ersten Kontaktbereich einer zweiten Uhrkomponente vorhandenes Schmiermittel in Richtung einer Fläche des zweiten Kontaktbereichs zu bewegen, und so dass die zweite Kontaktfläche (11) des zweiten Zahns in der Lage ist, anschließend mit der Fläche des zweiten Kontaktbereichs der zweiten Komponente, die das Schmiermittel umfasst, in Kontakt zu kommen.

2. Rad (1) für ein Uhrwerk nach dem vorangehenden Anspruch, **dadurch gekennzeichnet, dass** es zwei Arten von Zähnen (10) umfasst, wobei jeder Zahn jeder Art zumindest eine Kontaktfläche (11) umfasst, die dazu bestimmt ist, mit einer und derselben zweiten Uhrkomponente zusammenzuwirken, wobei die jeweiligen Kontaktflächen (11) der beiden Arten von Zähnen (10) zueinander versetzt sind, und dass es einen Wechsel zwischen einem Zahn (10) der ersten Art und einem Zahn (10) der zweiten Art umfasst, so dass eine erste Kontaktfläche (11) eines ersten Zahns der ersten Art in der Lage ist, das auf einer zweiten Uhrkomponente vorhandene Schmiermittel in Richtung einer Fläche zu bewegen, und so dass eine zweite Kontaktfläche eines Zahns der zweiten Art in der Lage ist, anschließend mit der Fläche der zweiten Komponente, die das Schmiermittel umfasst, in Kontakt zu kommen, und umgekehrt.

3. Rad (1) für ein Uhrwerk nach einem der Ansprüche 1 bis 2, **dadurch gekennzeichnet, dass** die beiden Kontaktflächen (11) von zwei aufeinanderfolgenden separaten Zähnen (10) symmetrisch in Bezug auf eine horizontale Mittelebene des Rads (1) senkrecht zur Drehachse des Rads zueinander versetzt sind.

4. Rad (1) für ein Uhrwerk nach einem der Ansprüche 1 bis 3, **dadurch gekennzeichnet, dass** die beiden Kontaktflächen (11) der beiden aufeinanderfolgenden separaten Zähne (10) durch eine Verschiebung in einer vertikalen Richtung (Z) parallel zur Drehachse des Rads zueinander versetzt sind und/oder dass die beiden Kontaktflächen (11) von zwei aufeinanderfolgenden separaten Zähne (10) in Bezug auf eine horizontale Ebene senkrecht zur Drehachse des Rads zueinander versetzt sind und/oder dass sich die beiden versetzten Kontaktflächen (11) der beiden aufeinanderfolgenden separaten Zähne (10) vom unteren bzw. oberen Ende der Außenfläche (6) der Zähne (10) erstrecken.

5. Rad (1) für ein Uhrwerk nach einem der Ansprüche 1 bis 4, **dadurch gekennzeichnet, dass** es zumindest zwei aufeinanderfolgende separate Zähne (10) umfasst, die jeweils eine Außenfläche (6) aufweisen, die eine Kontaktfläche (11) ausbildet, die sich durch einen Ausschnitt unterscheidet, der eine zurückgesetzte Fläche (12) ausbildet, die in Bezug auf die Außenfläche (6) an jedem der beiden Zähne unterschiedlich positioniert ist.

6. Rad (1) für ein Uhrwerk nach dem vorangehenden Anspruch, **dadurch gekennzeichnet, dass** es zumindest einen Zahn (10) umfasst, dessen Außenfläche (6) eine ebene und rechteckige zurückgesetzte Fläche (12) umfasst, die im Wesentlichen parallel zu einer anderen ebenen Kontaktfläche (11) ist, wobei diese beiden Flächen (11, 12) durch eine Wand getrennt sind, die in einer horizontalen Ebene senkrecht zur Drehachse des Rads positioniert ist.

7. Rad (1) für ein Uhrwerk nach Anspruch 5, **dadurch gekennzeichnet, dass** es zumindest einen Zahn (10) umfasst, dessen Außenfläche (6) eine zurückgesetzte Fläche (12) umfasst, die in Bezug auf eine Kontaktfläche (11) abgeschrägt ist, wobei diese beiden Flächen (11, 12) durch ein Segment begrenzt sind, das sich in der orthoradialen Richtung erstreckt, oder durch eine Abschrägung, die sich sowohl in der orthoradialen als auch in der vertikalen Richtung (Z) parallel zur Drehachse des Rads erstreckt, um eine kegelstumpfförmige abgeschrägte zurückgesetzte Fläche (12) auszubilden.

8. Baugruppe für ein Uhrwerk, umfassend ein Rad (1) nach einem der Ansprüche 1 bis 7 und eine zweite Uhrkomponente, wobei das Rad durch einen geschmierten Kontakt mit der zweiten Uhrkomponente zusammenwirkt, wobei das Rad zumindest zwei separate Kontaktflächen umfasst, die mit der zweiten Uhrkomponente zusammenwirken, **dadurch gekennzeichnet, dass** die beiden Kontaktflächen zueinander versetzt sind, so dass ihre beiden jeweiligen Kontaktbereiche, d. h. ein erster Kontaktbereich und ein zweiter Kontaktbereich, auf der zweiten Komponente versetzt sind, so dass eine erste Kontaktfläche des Rads in der Lage ist, ein auf der zweiten Uhrkomponente vorhandenes Schmiermittel vom ersten Kontaktbereich, mit dem die erste Kontaktfläche in Kontakt kommt, in Richtung des zweiten Kontaktbereichs, der in Bezug auf den ersten Kontaktbereich versetzt ist und mit dem die zweite Kontaktfläche in Kontakt kommt, zu bewegen, wobei die beiden Kontaktbereiche auf einer und derselben Kontaktfläche der zweiten Komponente positioniert sind.

9. Hemmvorrichtung für ein Uhrwerk, **dadurch gekennzeichnet, dass** sie ein Hemmungsrad (1) nach einem der Ansprüche 1 bis 7 umfasst, das mit einem Hemmungsanker (21) zusammenwirkt, oder dass sie eine Baugruppe für ein Uhrwerk nach dem vorangehenden Anspruch umfasst, wobei das Rad (1) ein Hemmungsrad ist und die zweite Uhrkomponente ein Hemmungsanker (21) ist.

10. Hemmvorrichtung für ein Uhrwerk nach dem vorangehenden Anspruch, **dadurch gekennzeichnet, dass** der Hemmungsanker (21) zwei separate Teile umfasst.

11. Uhrwerk, **dadurch gekennzeichnet, dass** es zumindest ein Rad (1) nach einem der Ansprüche 1 bis 7 oder eine Hemmvorrichtung nach Anspruch 9 oder 10 oder eine Baugruppe nach Anspruch 8 umfasst.

12. Zeitmessgerät, insbesondere Armbanduhr, **dadurch gekennzeichnet, dass** es zumindest ein Rad (1) nach einem der Ansprüche 1 bis 7 oder ein Uhrwerk nach dem vorangehenden Anspruch umfasst.

13. Verfahren zur Herstellung eines Rads für ein Uhrwerk nach einem der Ansprüche 1 bis 7, wobei das Rad dazu bestimmt ist, durch einen geschmierten Kontakt mit zumindest einer zweiten Uhrkomponente zusammenzuwirken, wobei das Rad zumindest zwei Kontaktflächen umfasst, die dazu bestimmt sind, mit einer und derselben zweiten Uhrkomponente zusammenzuwirken, **dadurch gekennzeichnet, dass** das Herstellungsverfahren einen Schritt umfasst, bei dem die beiden Kontaktflächen zueinander versetzt hergestellt werden, so dass ihre Kontaktbereiche auf einer und derselben zweiten Komponente versetzt sind, so dass eine erste Kontaktfläche in der Lage ist, ein auf einer zweiten Uhrkomponente vorhandenes Schmiermittel in Richtung einer Fläche zu bewegen, und so dass eine zweite Kontaktfläche in der Lage ist, anschließend mit der Fläche der zweiten Komponente, die das Schmiermittel umfasst, in Kontakt zu kommen.

14. Verfahren zur Herstellung einer Uhrkomponente oder eines Rads nach dem vorangehenden Anspruch, **dadurch gekennzeichnet, dass** der Schritt, bei dem die beiden Kontaktflächen in versetzter Weise hergestellt werden, einen Schritt des Ausschneidens, insbesondere durch maschinelle Bearbeitung, einer Außenfläche (6) eines Zahns umfasst, um eine Kontaktfläche (11) und eine angrenzende zurückgesetzte Fläche (12) auszubilden.

## Claims

1. Wheel (1) for a horology movement, intended to cooperate via a lubricated contact with at least one second horology component, the wheel (1) comprising at least two distinct consecutive teeth (10), a first tooth and a second tooth, each comprising at least one contact surface (11), respectively a first contact surface and a second contact surface, these contact surfaces (11) of said two distinct consecutive teeth (10) being intended in this respect to cooperate with the same second horology component, **characterized in that** said two contact surfaces (11) of the two distinct consecutive teeth (10) are offset with respect to one another such as to offset their contact zones not totally overlapping on the same second component, respectively a first contact zone and a second contact zone not totally overlapping, such that the first contact surface (11) of the first tooth (10) is adapted to displace a lubricant present on the first contact zone of a second horology component towards a surface of the second contact zone, and such that the second contact surface (11) of the second tooth is adapted to subsequently come into contact on said surface of the second contact zone of the second component comprising the lubricant.

2. Wheel (1) for a horology movement according to the preceding claim, **characterized in that** it comprises two types of teeth (10), each tooth of each type comprising at least one contact surface (11) intended to cooperate with a same second horology component, the respective contact surfaces (11) of the two types of teeth (10) being offset in relation to one another, and **in that** it comprises an alternation of a tooth (10) of the first type with a tooth (10) of the second type, such that a first contact surface (11) of a first tooth according to the first type is adapted to displace the lubricant present on a second horology component towards a surface, and such that a second contact surface of a second tooth is adapted to subsequently come into contact on said surface of the second component comprising the lubricant, and vice versa.

3. Wheel (1) for a horology movement according to one of Claims 1 to 2, **characterized in that** said two contact surfaces (11) of two distinct consecutive teeth (10) are offset with respect to one another according to a symmetry in relation to a median horizontal plane of the wheel (1) perpendicular to the axis of rotation of the wheel.

4. Wheel (1) for a horology movement according to one of Claims 1 to 3, **characterized in that** said two contact surfaces (11) of the two distinct consecutive teeth (10) are offset by a translation in a vertical direction (Z) parallel to the axis of rotation of the wheel in relation to one another, and/or **in that** said two contact surfaces (11) of two distinct consecutive teeth (10) are offset with respect to one another in relation to a horizontal plane perpendicular to the axis of rotation of the wheel, and/or **in that** said two offset contact surfaces (11) of the two distinct consecutive teeth (10) extend respectively from the lower and upper extremities of the outermost surface (6) of said teeth (10).

5. Wheel (1) for a horology movement according to one of Claims 1 to 4, **characterized in that** it comprises at least two distinct consecutive teeth (10), each comprising an outermost surface (6) forming a contact surface (11) distinguished by a cut-out forming a recessed surface (12) positioned differently in relation to the outermost surface (6) on each of the two teeth.

6. Wheel (1) for a horology movement according to the preceding claim, **characterized in that** it comprises at least one tooth (10) of which the outermost surface (6) comprises a plane and rectangular recessed surface (12), substantially parallel to a plane contact surface (11), these two surfaces (11, 12) being separated by a wall positioned in a horizontal plane perpendicular to the axis of rotation of the wheel.

7. Wheel (1) for a horology movement according to Claim 5, **characterized in that** it comprises at least one tooth (10) of which the outermost surface (6) comprises a bevelled recessed surface (12) in relation to a contact surface (11), these two surfaces (11, 12) being delimited by a segment extending in the orthoradial direction or by a bevel extending in the two orthoradial and vertical directions (Z) parallel to the axis of rotation of the wheel in order to form a recessed surface (12) in the form of a truncated cone.

8. Assembly for a horology movement comprising a wheel (1) according to one of Claims 1 to 7 and a second horology component, the wheel cooperating via a lubricated contact with the second horology component, the wheel comprising at least two distinct contact surfaces cooperating with the second horology component, **characterized in that** said two contact surfaces are offset with respect to one another such as to offset their two respective contact zones, respectively a first contact zone and a second contact zone, on the second component, such that a first contact surface of the wheel is adapted to displace a lubricant present on the second horology component of the first contact zone, with which said first contact surface comes into contact, towards the second contact zone, offset in relation to the first contact zone, with which said second contact surface comes into contact, said two contact zones being positioned on the same contact surface of the second component.

9. Escapement device for a horology movement, **characterized in that** it comprises an escapement wheel (1) according to one of Claims 1 to 7, cooperating with an escapement lever (21), or **in that** it comprises an assembly for a horology movement according to the preceding claim, in which the wheel (1) is an escapement wheel and the second horology component is an escapement lever (21).

10. Escapement device for a horology movement according to the preceding claim, **characterized in that** the escapement lever (21) comprises two distinct parts.

11. Horology movement, **characterized in that** it comprises at least one wheel (1) according to one of Claims 1 to 7 or an escapement device according to Claim 9 or 10 or an assembly according to Claim 8.

12. Timepiece, especially a wristwatch, **characterized in that** it comprises at least one wheel (1) according to one of Claims 1 to 7 or a horology movement according to the preceding claim.

13. Method of manufacturing a wheel for a horology movement according to one of Claims 1 to 7, said wheel being intended to cooperate via a lubricated contact with at least one second horology component, said wheel comprising at least two contact surfaces intended to cooperate with the same second horology component, **characterized in that** the method of manufacturing comprises a stage of manufacturing said two contact surfaces in an offset manner in relation to one another such as to offset their contact zones on the same second component, such that a first contact surface is adapted to displace a lubricant present on a second horology component towards a surface, and such that a second contact surface is adapted to subsequently come into contact on said surface of the second component comprising the lubricant.

14. Method of manufacturing a horology component or a wheel according to the preceding claim, **characterized in that** the stage of manufacturing said two contact surfaces in an offset manner comprises a cutting stage, especially by machining, of an outermost surface (6) of a tooth in order to form a contact surface (11) and a recessed surface (12) that are contiguous.
